# EUROPEAN PATENT SPECIFICATION

(11) **EP 4 217 274 B1**
(45) Date of publication and mention of the grant of the patent: **27.08.2025**
(21) Application number: 21795117.7
(22) Date of filing: 24.09.2021
(51) Int. Cl.: B64D 11/06

(54) **SLIDE-OUT TRAY TABLE WITH INTERLOCK ASSEMBLY**
AUSZIEHBARER TABLETTTISCH MIT VERRIEGELUNGSANORDNUNG
TABLETTE COULISSANTE POURVUE D'UN ENSEMBLE DE VERROUILLAGE

(30) Priority: 25.09.2020 US 202063083780 P
(43) Date of publication of application: 02.08.2023
(73) Proprietor: S&S Numerical Control, Inc., Northridge, CA 91324 (US)
(72) Inventor: SATTERFIELD, John, Northridge, California 91324 (US); SILVERWOOD, Neal, Bothell, Washington 98011 (US); BETTENHAUSEN, Kyle, Bothell, Washington 98011 (US); SENECHAL, Gary, Bothell, Washington 98011 (US); SANDIFER, Dane, Northridge, California 91324 (US)
(74) Representative: Müller-Boré & Partner Patentanwälte PartG mbB
(86) International application number: PCT/US2021/052084
(87) International publication number: WO 2022/067119

(56) References cited:
- WO-A1-2011/089558
- CA-A1- 2 465 972
- US-B2- 7 306 282

## Description

### BACKGROUND

Slide-out tray tables for aircraft include telescoping bases that enable the tray table to be extended outward from a stowed position within a structure that is adjacent (e.g., in front of, alongside, etc.) the user's seat. Once the tray table has been pulled out to the extended position, the table leaf of the tray table is rotated to position the table leaf for use. However, during various movements of the base and the table leaf, the table leaf may come into contact with the adjacent structure, which may damage the tray table and/or the adjacent structure. Interlock assemblies are known for restricting linear movement of the base and/or rotation of the table leaf in certain positions of the tray table. However, known interlock assemblies may be insufficiently intuitive to prevent some users from mishandling, and thereby possibly damaging, the tray table. Moreover, known interlock assemblies may be relatively heavy and/or complex.
US 7 306 282 B2 relates to a table unit for seats in vehicles, especially airplane seats, comprising a first table element which is provided with the functions of a table, and a second table element which is provided with at least one other table function.
CA 2465 972 A1 describes that a seat for aircraft provided with integrated components for the user's comfort includes an outboard armrest to which is mounted a folding table that is movable between a stowed position where it lies on top of the armrest to an operational position.

### SUMMARY

In accordance with the claimed invention, a slide-out tray table for an aircraft is defined in claim 1.

In another aspect of the claimed invention, a method of configuring a slide-out tray table for an aircraft is defined in claim 4.

### BRIEF DESCRIPTION OF THE DRAWINGS

Figure 1 is a perspective view illustrating a slide-out tray table for an aircraft according to the claimed invention.
Figure 2 is another perspective view illustrating the slide-out tray table shown in Figure 1 according to the claimed invention.
Figure 3 is a perspective view of a portion of a passenger compartment of an aircraft.
Figure 4 is a series of plan views illustrating operation of the slide-out tray table shown in Figures 1 and 2 according to the claimed invention.
Figure 5 is a series of perspective views illustrating the slide-out tray table shown in Figures 1 and 2 according to the claimed invention.
Figure 6 is a perspective view of the slide-out tray table shown in Figures 1 and 2 illustrating an interlock assembly.
Figure 7 is another perspective view of the slide-out tray table shown in Figures 1 and 2 illustrating the interlock assembly shown in Figure 6.
Figure 8 is a perspective view of a table leaf of the slide-out tray table shown in Figures 1 and 2 illustrating a cam of the table leaf according to the claimed invention.
Figure 9 is a perspective view illustrating the slide-out tray table shown in Figures 1 and 2 in an extended position of the slide-out tray table according to the claimed invention.
Figure 10 is a perspective view illustrating the table leaf of the slide-out tray table shown in Figures 1 and 2 in an intermediate position according to the claimed invention.
Figure 11 is a perspective view illustrating an interlock of the interlock assembly shown in Figure 6 engaged with a stop of the slide-out tray table according to the claimed invention.
Figure 12 is a perspective view illustrating the interlock assembly shown in Figure 6 when the slide-out tray table is in an egress position according to the claimed invention.
Figure 13 is a perspective view of the slide-out tray table shown in Figures 1 and 2 illustrating a latch of the slide-out tray table according to an implementation.
Figure 14 is a perspective view illustrating the latch shown in Figure 13 according to an implementation.
Figure 15 is a cross-sectional view illustrating the latch shown in Figures 13 and 14 according to an implementation.
Figure 16 is a cut away perspective view of a slide-out tray table illustrating a latch according to another implementation.
Figure 17 is a partially exploded perspective view of a portion of a slide-out tray table according to the claimed invention.
Figure 18 is a flow chart illustrating a method of configuring a slide-out tray table for an aircraft according to the claimed invention.
Figure 19 is a schematic view of an implementation of an aircraft.

### DETAILED DESCRIPTION

The foregoing summary, as well as the following detailed description of certain embodiments and implementations will be better understood when read in conjunction with the appended drawings. As used herein, an element or step recited in the singular and preceded by the word "a" or "an" should be understood as not necessarily excluding the plural of the elements or steps. Further, references to "one embodiment" or "one implementation" are not intended to be interpreted as excluding the existence of additional embodiments or implementations that also incorporate the recited features. Moreover, unless explicitly stated to the contrary, embodiments "comprising" or "having" an element or a plurality of elements having a particular property can include additional elements not having that property.

While various spatial and directional terms, such as "top," "bottom," "upper," "lower," "vertical," and the like are used to describe embodiments and implementations of the claimed invention, it is understood that such terms are merely used with respect to the orientations shown in the drawings. The orientations can be inverted, rotated, or otherwise changed, such that a top side becomes a bottom side if the structure is flipped 180 degrees, becomes a left side or a right side if the structure is pivoted 90°, and the like.

The claimed invention provides a method of configuring a slide-out tray table for an aircraft. The method includes operatively connecting a first interlock of the tray table to a table leaf of the tray table such that rotation of the table leaf from a stowed position toward a deployed position of the table leaf moves the first interlock from an unlocked position of the first interlock to a locked position of the first interlock. The method further includes operatively connecting a second interlock of the tray table to the table leaf such that rotation of the table leaf into the deployed position moves the second interlock from an unlocked position of the second interlock to a locked position of the second interlock.

Certain implementations provide slide-out tray tables that are more intuitive to use, for example as compared to at least some know slide-out tray tables. Certain implementations provide slide-out tray tables having improved user experience, for example as compared to at least some known
slide-out tray tables. Certain implementations reduce the weight and/or complexity of interlock assemblies of slide-out tray tables, for example as compared to at least some known interlock assemblies. Certain implementations provide interchangeable components that reduce maintenance costs, for example as compared to at least some known slide-out tray tables.

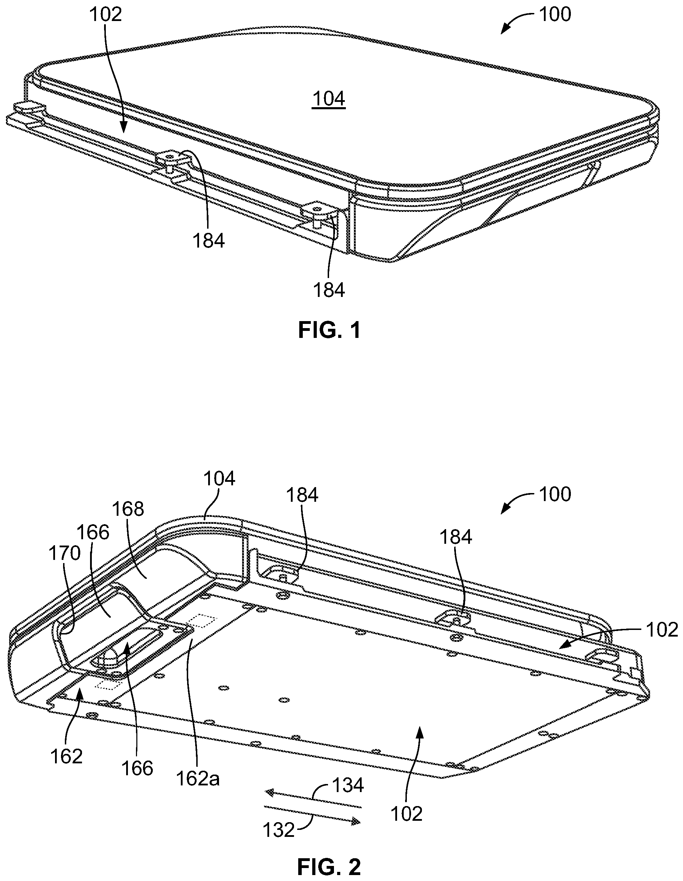

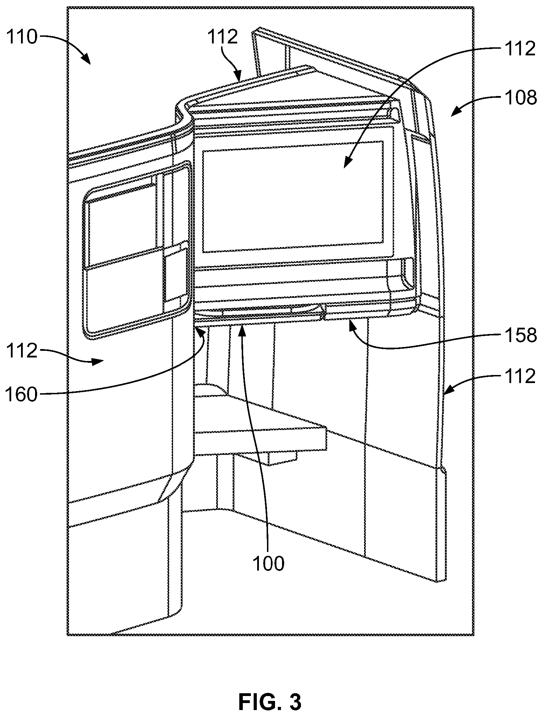

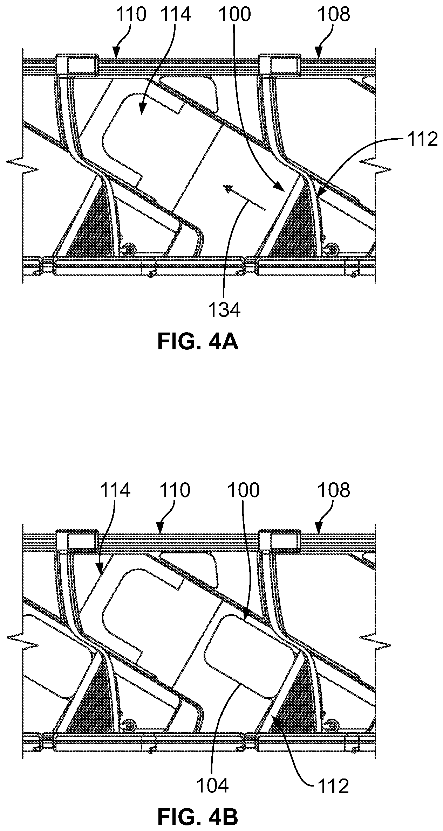

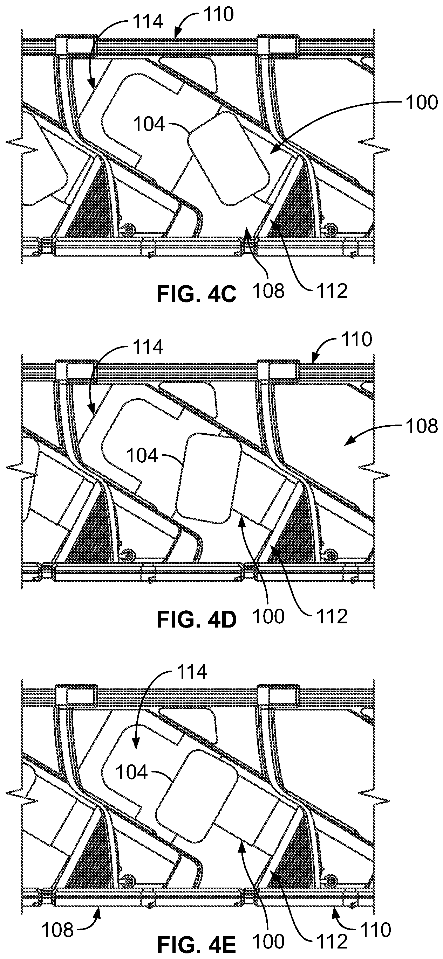

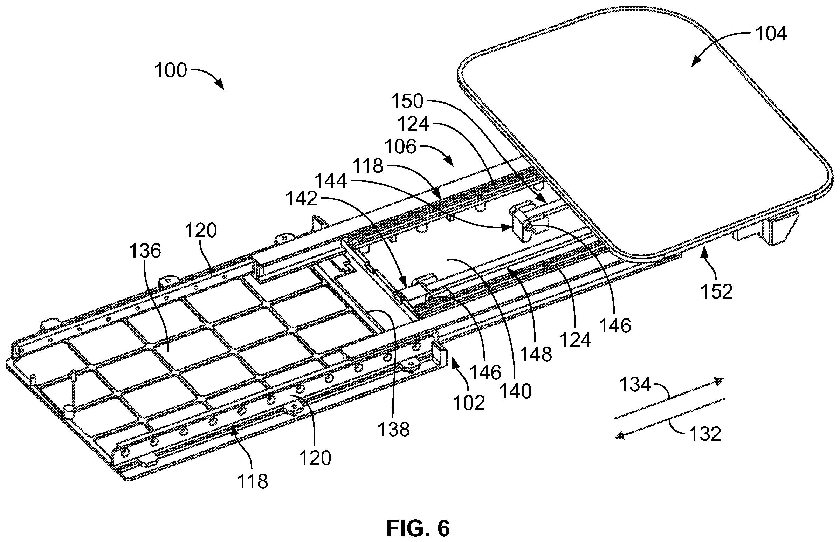

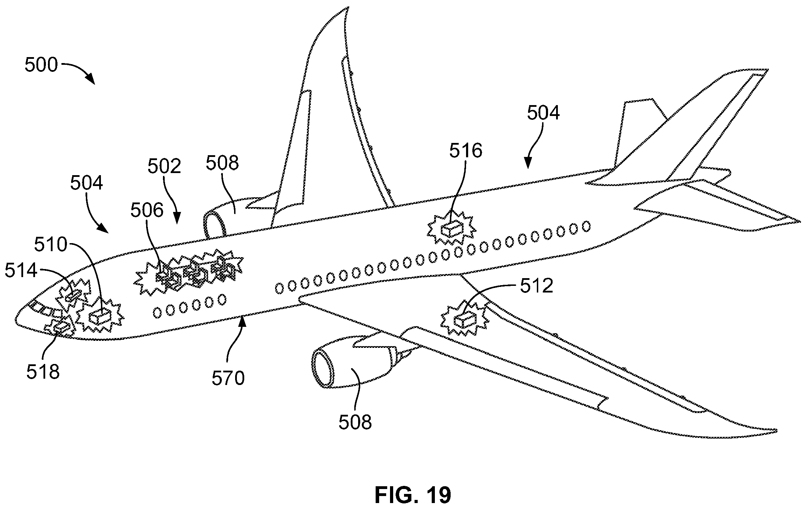

With references now to the figures, perspective views of a slide-out tray table 100 for an aircraft (e.g., the aircraft 110 shown in Figures 3 and 4, the aircraft 500 shown in Figure 19, etc.) are provided in Figures 1 and 2. The tray table 100 includes a telescoping base 102, a table leaf 104 mounted to the base 102, and an interlock assembly 106. The interlock assembly 106 is not visible in Figures 1 and 2 but will be described in more detail below with respect to Figures 6-12. For example, the interlock assembly 106 is configured to limit movement of the tray table 100 toward a stowed position of the tray table 100 past an egress position of the tray table 100, when the table leaf 104 is in an intermediate position. Moreover, and for example, the interlock assembly 106 is configured to limit rotation of the table leaf 104 from a deployed position of the table leaf 104 toward a stowed position of the table leaf 104 when the tray table 100 is in the egress position.

Figures 1 and 2 illustrate the tray table 100 in the stowed position. The stowed position of the tray table 100 will also be referred to herein as a "retracted position" of the tray table 100. The tray table 100 is configured to be mounted within the passenger compartment of an aircraft adjacent (e.g., in front of, alongside, on the back of, etc.) a seat.
For example, Figures 3 and 4 illustrate the tray table 100 shown in Figures 1 and 2 mounted within an exemplary passenger compartment 108 of an exemplary aircraft 110. The tray table 100 is shown in Figure 3 mounted to a seating structure 112 of the passenger compartment 108 such that the tray table 100 (shown in the stowed position) is mounted in front of a seat 114 (not shown in Figure 3) for use by an occupant of the seat 114. The
geometry and arrangement of the seating structure 112, as well as the relative location and orientation of the tray table 100 relative to the seat 114, are meant merely as examples thereof. The tray table 100 is not limited to being mounted in front of a seat, nor is the tray table 100 limited to use with the particular example of the seating structure 112 shown in Figures 3 and 4. Rather, any other arrangement that enables the tray table 100 to function as described and/or herein may be provided (e.g., the tray table 100 may be mounted alongside a seat for use by an occupant of the seat, etc.)

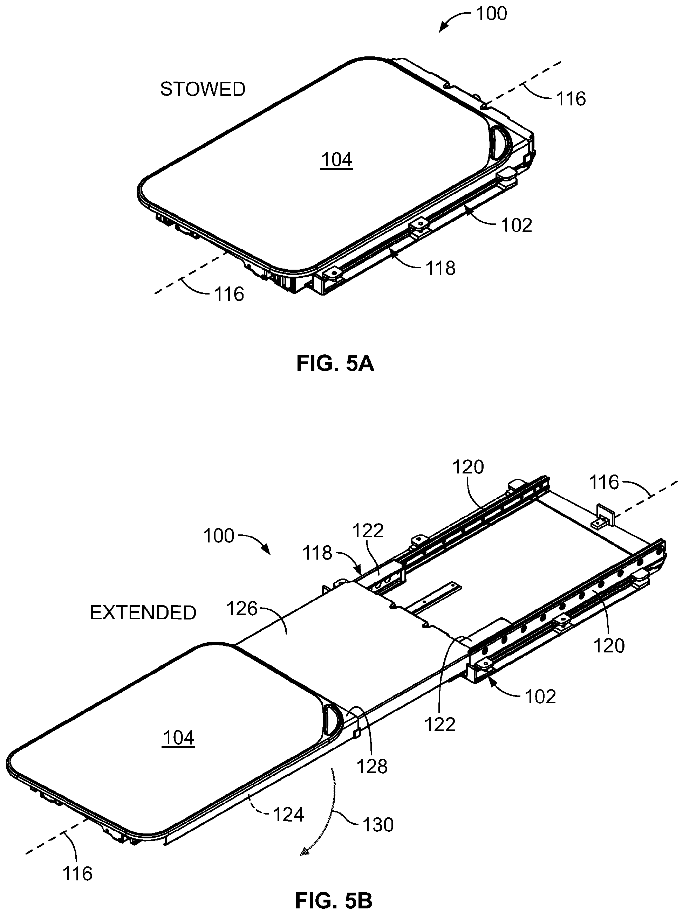

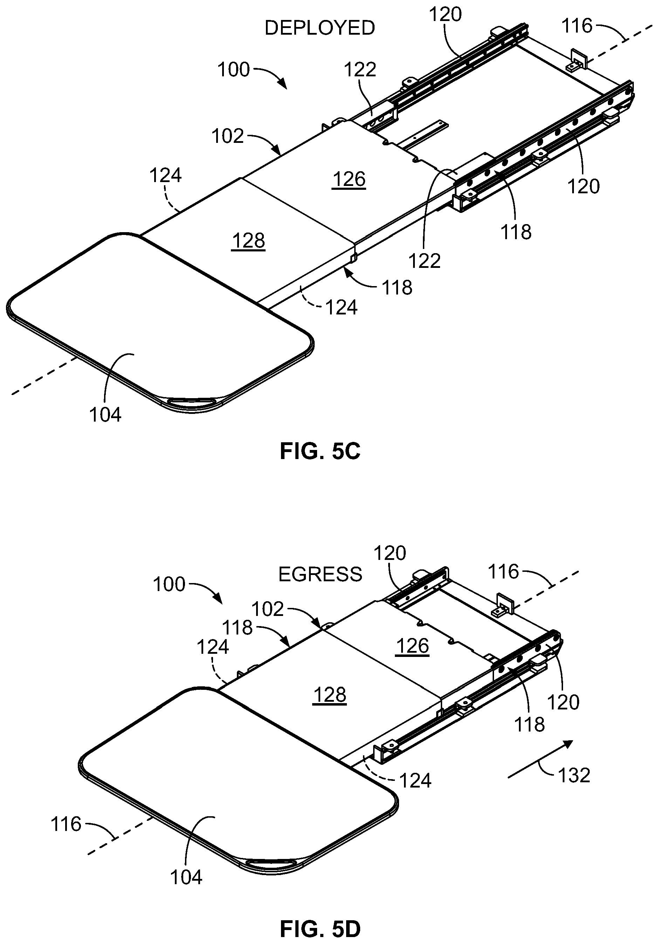

Referring now to Figure 5, the tray table 100 is moveable between the stowed position and a deployed position. Figure 5a illustrates the tray table 100 in the stowed position, while Figure 5c illustrates the tray table 100 in the deployed position. To move the tray table 100 to the deployed position (e.g., deploy the tray table 100 for use, etc.), the tray table 100 is moveable from the stowed position to an extended position of the tray table 100, which is shown in Figure 5b. For example, the base 102 of the tray table 100 is configured to telescope inwardly and outwardly along a longitudinal axis 116 to move the tray table 100 between the stowed position shown in Figure 5a and the extended position shown in Figure 5b. In other words, the base 102 of the tray table 100 is configured to expand outwardly and retract inwardly along the longitudinal axis 116 between the stowed position of the tray table 100 and the extended position of the tray table 100.

For example, in some implementations, the base 102 of the tray table 100 includes a telescopic rail system 118 having rail sets 120, 122, and 124 (the rail sets 122 and 124 are best seen in Figure 6). The rail sets 120, 122, and 124 are slidably interconnected with each other such that the rail sets 120, 122, and 124 are configured to slide relative to each other along the longitudinal axis 116 to thereby expand and contract the base 102 along the longitudinal axis 116. Figures 5b, 5c, and 5d illustrate optional covers 126 and 128 that cover the rail sets 122 and 124. The base 102 is not limited to the exemplary rail system 118 shown and described herein. Rather, in addition or alternatively to the rail system 118, the base 102 may include any other structure, system, mechanism, device, and/or the like that enables the base 102 to expand and contract along the longitudinal axis 116 and thereby move the tray table 100 between the stowed and extended positions. Although shown as having three rail sets 120, 122, and 124, the rail system 118 may include any other number of rail sets. Moreover, although each rail set 120, 122, and 124 includes two opposing rails in the exemplary implementation, in other implementations one or more rail sets includes another number of rails (e.g., a single rail, three rails, etc.).

The table leaf 104 of the tray table 100 is selectively rotatably relative to the base 102 between a stowed position of the table leaf 104 and a deployed position of the table leaf 104. As shown in Figure 5a, the table leaf 104 is in the stowed position thereof when the tray table 100 is in the stowed position thereof. To further deploy the tray table 100 from the extended position of the tray table 100 shown in Figure 5b to the deployed position of the tray table 100 shown in Figure 5c, the table leaf 104 is rotated relative to the base 102 (e.g., in the direction of the arrow 130, etc.) from the stowed position thereof shown in Figure 5b into the deployed position of the table leaf 104 shown in Figure 5c. In some implementations, the tray table 100 is configured such that the table leaf 104 extends over the lap of an occupant of the corresponding seat when the tray table 100 is in the deployed position thereof.

From the deployed position shown in Figure 5c, the tray table 100 can be moved to an egress position of the tray table 100, which is shown in Figure 5d. Specifically, in the egress position of the tray table 100, the base 102 is partially collapsed (e.g., retracted partially inwardly, etc.) along the longitudinal axis 116 such that the table leaf 104 is moved along the longitudinal axis 116 in the direction of the arrow 132 relative to the extended position of the tray table 100 shown in Figures 5b and 5c. As shown in Figure 5d, in the egress position of the tray table 100, the table leaf 104 remains in the deployed position thereof. The egress position of the tray table 100, for example; enables an occupant of the corresponding seat to stand up and/or leave the seat; provides the occupant with greater freedom of movement; provides the occupant with more arm and/or leg space; etc.

In operation, and referring again to Figure 4, the tray table 100 is deployed for use by pulling on the tray table 100 in the direction of the arrow 134 to thereby move the tray table 100 from the stowed position of the tray table 100 shown in Figure 4a to the extended position of the tray table 100 shown in Figure 4b. The table leaf 104 of the tray table 100 is then rotated from the stowed position of the table leaf 104 shown in Figure 4b into the deployed position of the table leaf 104 shown in Figure 4e. Figures 4c and 4d illustrate the table leaf 104 in intermediate positions between the stowed position shown in Figure 4b and the deployed position shown in Figure 4e. As shown in Figure 4, in the exemplary implementation the table leaf 104 is rotated 90° from the stowed position shown in Figure 4b into the deployed position shown in Figure 4e. Other angular differences (e.g., 180°, etc.) between the stowed and deployed positions of the table leaf 104 are contemplated as being within the scope of the present disclosure.

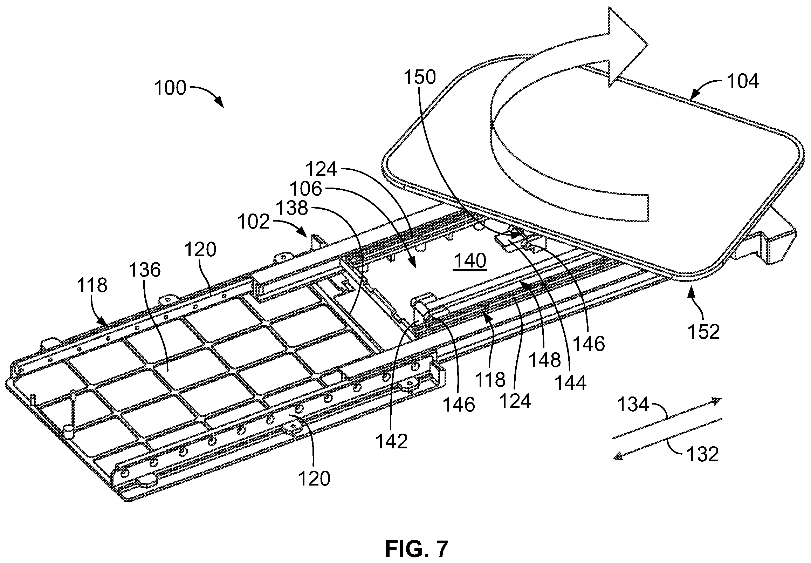

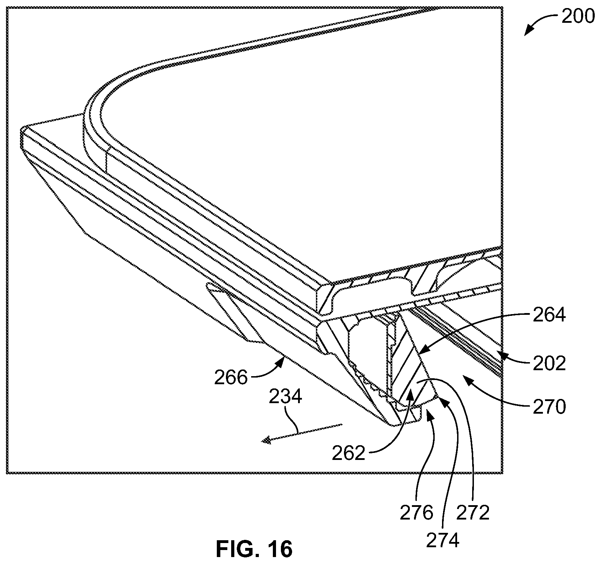

Referring now to Figures 6 and 7, the interlock assembly 106 of the tray table will now be described. The covers 126 and 128 (shown in Figure 5) of the base 102 have been removed from Figures 6 and 7 to better illustrate the interlock assembly 106. The base 102 of the tray table 100 includes a base plate 136 into which the rail set 120 of the rail system 118 is incorporated (e.g., the rail set 120 is mounted to the base plate 136 as shown in the exemplary implementation of Figures 6 and 7, the rail set 120 is integrally formed as a single unitary structure with the base plate 136, etc.). The base plate 136 includes a stop 138. The base 102 of the tray table 100 also includes a base plate 140 into which the rail set 124 of the rail system 118 is incorporated (e.g., the rail set 124 is mounted to the base plate 140 as shown in the exemplary implementation of Figures 6 and 7; the rail set 124 is integrally formed as a single unitary structure with the base plate 140, for example as shown in the exemplary implementation of the slide-out tray table 200 of Figure 16; etc.).

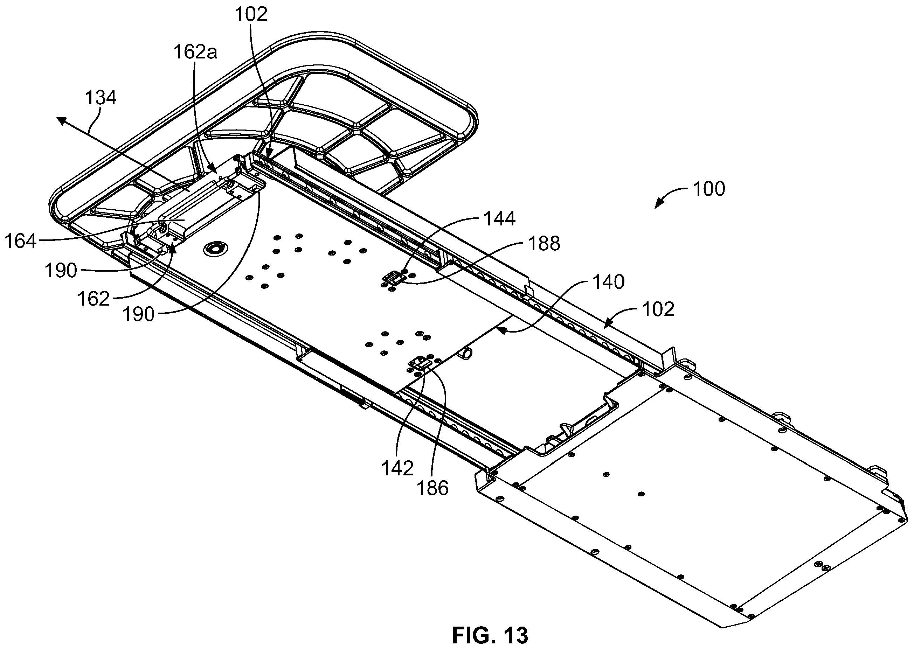

The interlock assembly 106 includes a first interlock 142 and a second interlock 144. Each interlock 142 and 144 is moveable between a locked position and an unlocked position. In some implementations, the interlock 142 and/or the interlock 144 is configured to provide an audible and/or tactile indication (e.g., a snap indication, etc.) that the interlock 142 and/or 144 has moved into the locked position and/or the unlocked position
thereof. Figure 6 illustrates the first interlock 142 in the unlocked position and the second interlock 144 in the locked position while Figure 7 illustrates the first interlock 142 in the locked position and the second interlock 144 in the unlocked position. In some implementations, the base plate 140 of the base 102 includes one or more openings (e.g., the openings 186 and 188 shown in Figure 13, etc.) to accommodate movement of the interlocks 142 and/or 144 from the unlocked position to the locked position thereof. For example, and referring now to Figure 13, the base plate 140 may include one or more openings 186 into or through which the first interlock 142 moves as the first interlock 142 moves from the unlocked position to the locked position thereof; and/or the base plate 140 may include one or more openings 188 into or through which the second interlock 144 moves as the second interlock 144 moves from the unlocked position to the locked position thereof.

In the exemplary implementation, each of the interlocks 142 and 144 is configured to rotate (e.g., pivot, etc.) between the locked and unlocked positions. For example, the interlocks 142 and 144 are shown in the exemplary implementation as being hingedly mounted to the base plate 140 at a pivot point 146 for rotation about the pivot point between the locked and unlocked positions. In other implementations, the first interlock 142 and/or the second interlock 144 moves with linear motion (e.g., up and down as viewed in Figures 6 and 7, etc.) between the locked and unlocked positions thereof in addition to the rotational movement shown herein. Although shown herein as having a paddle structure, the first interlock 142 and/or the second interlock 144 may additionally or alternatively include any other structure (e.g., a pin structure, etc.) that enables the interlock 142 and/or 144 to function as described and/or illustrated herein.

Movement of the interlocks 142 and 144 between the locked and unlocked positions thereof is driven by rotation of the table leaf 104 of the tray table 100. The implementation of the interlock assembly 106 shown in Figures 6 and 7 includes linkage 148 that is operatively connected between the first interlock 142 and the table leaf 104 such that the linkage 148 translates rotation of the table leaf 104 into linear motion that rotates the first interlock 142 between the locked and unlocked positions thereof. Similarly, the implementation of the interlock assembly 106 shown in Figures 6 and 7 includes linkage 150 that is operatively connected between the second interlock 144 and the table leaf 104 such that the linkage 150 translates rotation of the table leaf 104 into linear motion that rotates the second interlock 144 between the locked and unlocked positions thereof.

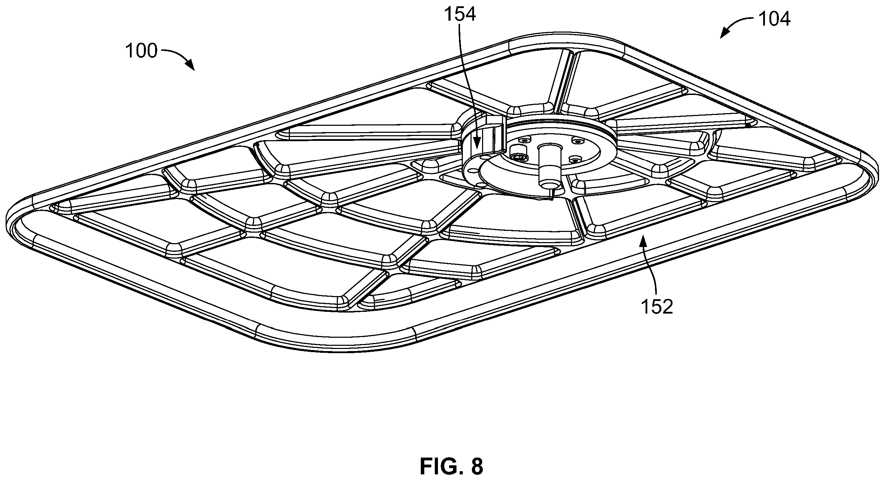

In the exemplary implementation, an underside 152 of the table leaf 104 includes one or more cams 154 (not visible in Figures 6 and 7) that enable rotation of the table leaf 104 to move the interlocks 142 and 144 between the locked and unlocked positions thereof. Figure 8 illustrates an exemplary implementation of a cam 154 used to drive movement of the interlocks 142 and 144 (not shown in Figure 8) between the locked and unlocked positions thereof. Referring now to Figures 6-8, the linkage 148 (not shown in Figure 8) is operatively connected between the first interlock 142 and the cam 154 of the table leaf 104 such that the linkage 148 translates rotation of the table leaf 104 into linear motion of the linkage 148 (e.g., in the directions 132 and 134 along the longitudinal axis 116, etc.) to thereby rotate the first interlock 142 between the locked and unlocked positions thereof. For example, the cam 154 includes a profile that engages an end portion (not visible in Figures 6 and 7) of the linkage 148. A segment of the profile of the cam 154 has a geometry that is selected such that rotation of the table leaf 104 through a predetermined angular orientation pushes the linkage 148 in the direction of the arrow 132 to thereby move the first interlock 142 from the unlocked position shown in Figure 6 to the locked position shown in Figure 7. Similarly, and for example, another segment of the profile of the cam 154 has a geometry' that is selected such that rotation of the table leaf 104 through a predetermined angular orientation pulls the linkage 148 in the direction 134 to thereby move the first interlock 142 from the locked position shown in Figure 7 to the unlocked position shown in Figure 6.

Similar to the linkage 148, the linkage 150 is operatively connected between the second interlock 144 and the cam 154 such that the linkage 150 translates rotation of the table leaf 104 into linear motion of the linkage 150 (e.g., in the directions 132 and 134 along the longitudinal axis 116, etc.) to thereby rotate the second interlock 144 between the locked and unlocked positions thereof. For example, a segment of the profile of the cam 154 has a geometry that is selected such that rotation of the table l eaf 104 through a predetermined angular orientation pushes the linkage 1.50 in the direction 132 to thereby move the second interlock 144 from the unlocked position shown in Figure 7 to the locked position shown in Figure 6. Similarly, and for example, another segment of the profile of the cam 154 has a geometry that is selected such that rotation of the table leaf 104 through a predetermined angular orientation pulls the linkage 150 in the direction 134 to thereby move the second interlock 144 from the locked position shown in Figure 6 to the unlocked position shown in Figure 7.

Although the exemplary implementation of the interlock assembly 106 includes a single cam 154 for driving movement of both the interlocks 142 and 144 between the locked and unlocked positions thereof, the table leaf 104 may include any number of cams for driving movement of the interlocks 142 and 144. For example, in some other implementations, the table leaf 104 includes a first cam that is dedicated for driving movement of the first interlock 142 between the locked and unlocked positions thereof, and a second cam dedicated for driving movement of the second interlock 144 between the locked and unlocked positions thereof. Moreover, the configuration, arrangement, operation, and/or the like of the cam 154 and the linkages 148 and 150 shown and described herein is meant as exemplary only. The interlock assembly 106 may additionally or alternatively include any other structure, configuration, arrangement, components, operation, and/or the like that enables the interlock assembly to function as described and/or illustrated herein.

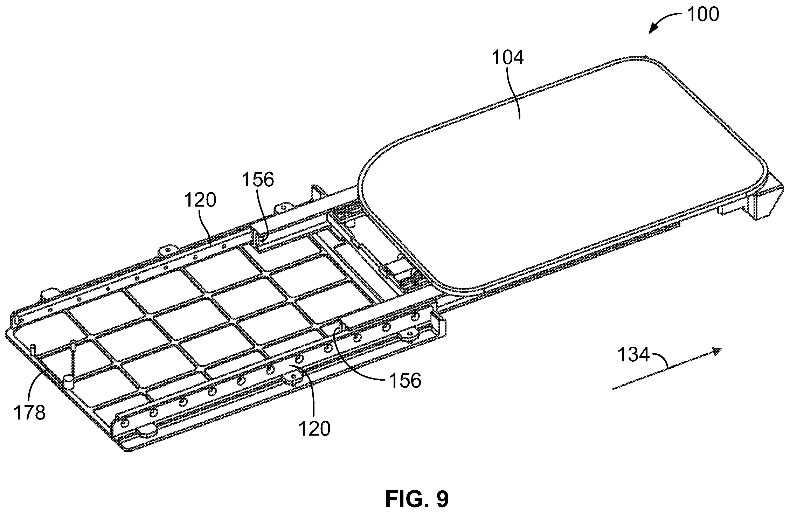

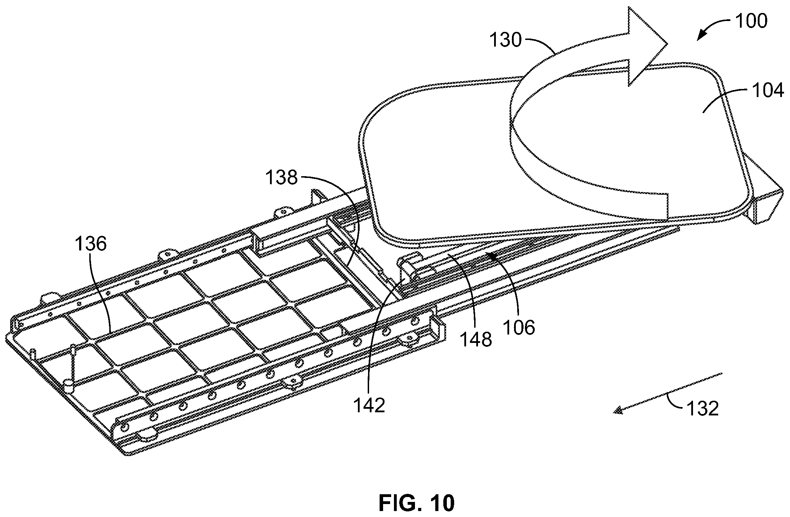

In operation, Figure 9 illustrates the tray table 100 having been pulled out in the direction 134 from the stowed position shown in Figure 5a to the extended position of the tray table 100. In some implementations, further movement of the tray table 100 in the direction 134 is limited by a stop, for example a stop 156 extending at a predetermined location along the length of the rail set 120. Referring now to Figure 10, as the table leaf 104 is rotated in the direction 130 from the stowed position of the table leaf 104 shown in Figure 9 toward the deployed position of the table leaf 104, the profile of the cam 154 (shown in Figure 8) causes the linkage 148 to move the first interlock 142 from the unlocked position shown in Figure 9 to the locked position shown in Figure 10.

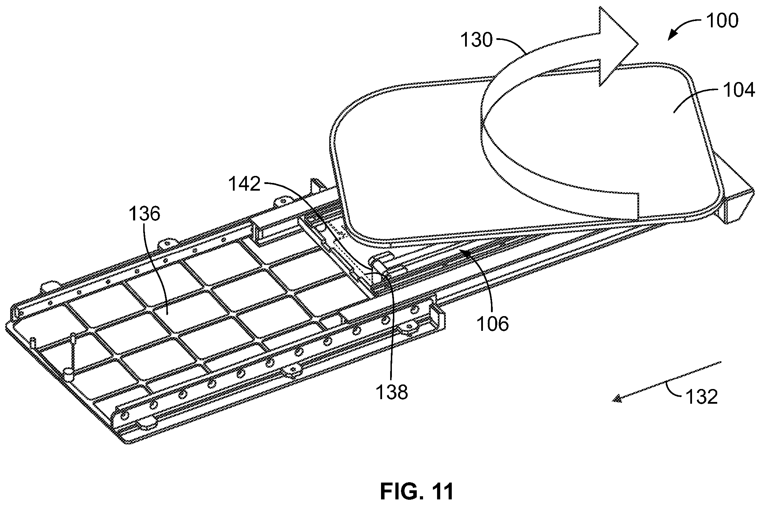

As shown in Figure 11, the locked position of the first interlock 142 is configured to engage the stop 138 of the base plate 136 to limit movement of the tray table 100 in the direction 132 from the extended position shown in Figure 10 toward the stowed position of the tray table 100. Accordingly, the first interlock 142 limits movement of the tray table 100 toward the stowed position when the table leaf 104 is in an intermediate position between the stowed and deployed positions of the table leaf 104, for example as shown in Figure 11. By limiting movement of the tray table 100 in the direction 132, the interlock assembly 106 prevents, or reduces the likelihood of, the table leaf 104 contacting (e.g., clashing with, etc.) adjacent structures of the aircraft in the event a user attempts to push the tray table 100 toward the stowed position of the tray table 100 when the table leaf 104 is in an intermediate position between the stowed and deployed positions of the table leaf 104. For example, the interlock assembly 106 may prevent, or reduce the likelihood of, the table leaf 104 contacting portions 158 and/or 160 of the seating structure 112 of the aircraft 110 shown in Figure 3 in the event a user attempts to push the tray table 100 toward the stowed position of the tray table 100 when the table leaf 104 is in an intermediate position between the stowed and deployed positions of the table leaf 104. The interlock assembly 106 therefore facilitates preventing damage to the tray table 100 and/or structures of the aircraft that are adjacent the tray table 100.

The first interlock 142 may be moved from unlocked position to the locked position by any amount rotation of the table leaf 104 away from the stowed position of the table leaf 104 toward the deployed position of the table leaf 104. For example, in some implementations, the geometry of the profile of the cam 154 (shown in Figure 8) is selected such that the first interlock 142 is moved from the unlocked position to the locked position by rotation of the table leaf 104 in the direction 130 of less than approximately 45° away from the stowed position of the table leaf 104. In other examples, the geometry of the profile of the cam 154 is selected such that the first interlock 142 is moved from the unlocked position to the locked position by rotation of the table leaf 104 in the direction 130 of less than approximately 30° away from the stowed position of the table leaf 104, less than approximately 20° away from the stowed position of the table leaf 104, at approximately 15° away from the stowed position of the table leaf 104 as shown in Figure 10, and/or the like. In some implementations, the amount of rotation of the table leaf 104 away from the stowed position thereof necessary to move the first interlock 142 from the unlocked position to the locked position thereof is selected based on the relative geometry of structures of the aircraft that are adjacent the tray table 100 (e.g., the first interlock 142 is configured to be moved to the locked position before the table leaf 104 moves to a position wherein the table leaf 104 will contact one or more adjacent structures of the aircraft, etc.).

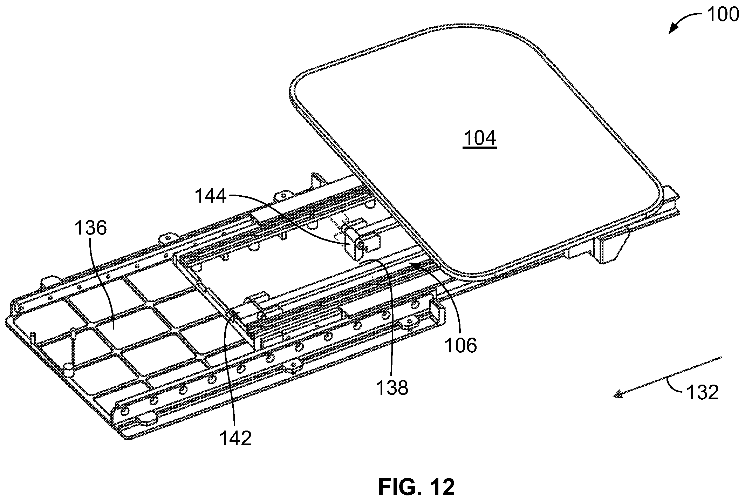

Referring again to Figures 6 and 7, as the table leaf 104 is rotated further in the direction 130 from the intermediate position shown in Figure 10 into the deployed position of the table leaf 104 shown in Figure 6, the profile of the cam 154 (shown in Figure 8) causes the linkage 150 of the second interlock 144 to move the second interlock 144 from the unlocked position shown in Figure 7 to the locked position shown in Figure 6. The profile of the cam 154 is selected such that rotation of the table leaf 104 from the intermediate position shown in Figure 10 into the deployed position of the table leaf 104 shown in Figure 6 also causes the linkage 148 of the first interlock 142 to move the first interlock 142 from the locked position shown in Figure 7 to the unlocked position shown in Figure 6. As shown in Figure 12, the unlocked position of the first interlock 142 enables the tray table 100 to be pushed in the direction 132 into the egress position of the tray table 100.

In the egress position of the tray table 100 shown in Figure 12, the locked position of the second interlock 144 is configured to engage the stop 138 of the base plate 136 to limit movement of the tray table 100 in the direction 132 (i.e., further toward the stowed position of the tray table 100) past the egress position of the tray table 100. Accordingly, the second interlock 144 limits movement of the tray table 100 in the direction 132 past the egress position of the tray table 100 when the table leaf 104 is in the deployed position of the table leaf 104. By limiting movement of the tray table 100 in the direction 132, the interlock assembly 106 prevents, or reduces the likelihood of, the table leaf 104 contacting (e.g., clashing with, etc.) adjacent structures of the aircraft in the event a user attempts to push the tray table 100 in the direction 132 past the egress position when the table leaf 104 is in the deployed position of the table leaf 104. For example, the interlock assembly 106 may prevent, or reduce the likelihood of, the table leaf 104 contacting the portions 158 and/or 160 of the seating structure 112 of the aircraft 110 shown in Figure 3 in the event a user attempts to push the tray table 100 past the egress position when the table leaf 104 is in the deployed positions of the table leaf 104. The interlock assembly 106 therefore facilitates preventing damage to the tray table 100 and/or structures of the aircraft that are adjacent the tray table 100.

As also shown in Figure 12, in the egress position of the tray table 100, the unlocked position of the first interlock 142 is configured to engage the base plate 136 of the base 102 to limit rotation of the table leaf 104 from the deployed position of the table leaf 104 toward the stowed position of the table leaf 104. In other words, the base plate 136 blocks the first interlock 142 from moving to the locked position and thereby prevents the table leaf 104 from being rotated from the deployed position of the table leaf 104 toward the stowed position of the table leaf 104 when the tray table 100 is in the egress position. By limiting rotation of the table leaf 104 toward the stowed position of the table leaf 104, the interlock assembly 106 prevents, or reduces the likelihood of, the table leaf 104 contacting (e.g., clashing with, etc.) adjacent structures of the aircraft in the event a user attempts to rotate the table leaf 104 toward the stowed position of the table leaf 104 when the tray table 100 is in the egress position. For example, the interlock assembly 106 may prevent, or reduce the likelihood of, the table leaf 104 contacting the portions 158 and/or 160 of the seating structure 112 of the aircraft 110 shown in Figure 3 in the event a user attempts to rotate the table leaf 104 toward the stowed position of the table leaf 104 when the tray table 100 is in the egress position. The interlock assembly 106 therefore facilitates preventing damage to the tray table 100 and/or structures of the aircraft that are adj acent the tray table 100.

From the deployed position of the tray table 100 shown in Figure 6, the tray table 100 may be moved into the stowed position of the tray table 100 by first rotating the table leaf 104 from the deployed position of the table leaf 104 shown in Figure 6 into the stowed position of the table leaf 104 shown in Figure 9. As the table leaf 104 is rotated toward the stowed position of the table leaf 104, the profile of the cam 154 (shown in Figure 8) of the table leaf 104 first moves the first interlock 142 from the unlocked position to the locked position thereof. As the table leaf 104 is further rotated into the stowed position of the table leaf 104, the profile of the cam 154 then moves the first interlock 142 back to the unlocked position shown in Figure 9. Rotation of the table leaf 104 from the deployed position of the table leaf 104 shown in Figure 6 into the stowed position of the table leaf 104 shown in Figure 9 also moves the second interlock 144 from the locked position shown in Figure 6 to the unlocked position of the second interlock 144. From the extended position of the tray table 100 shown in Figure 9, the tray table 100 can be moved into the stowed position of the tray table 100 by sliding the table leaf 104 in the direction 132 to thereby collapse the base 102 inwardly into the stowed position of the tray table 100 shown in Figure 5a.

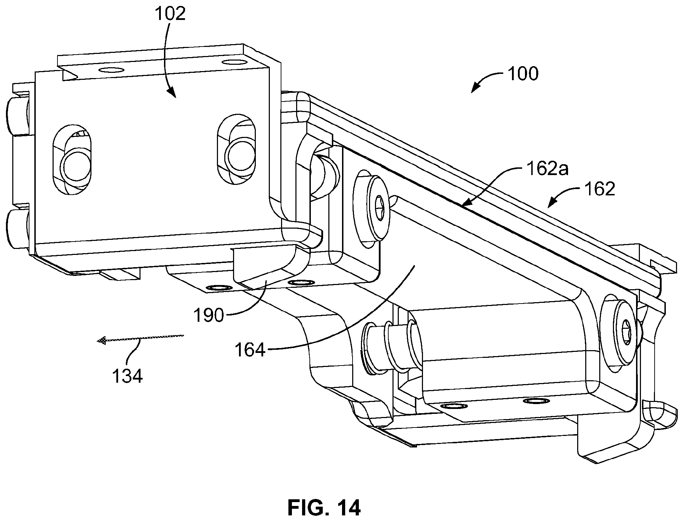

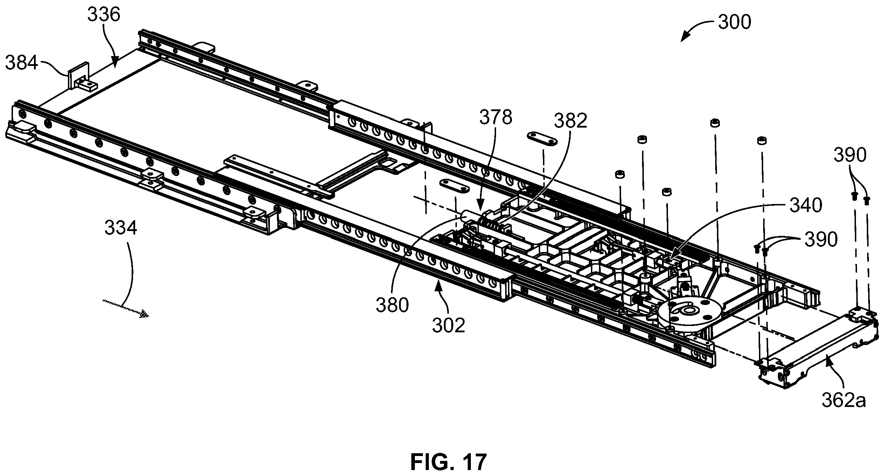

Referring now to Figures 2, 13, and 14, some implementations of the slide-out tray table 100 include a latch 162 configured to releasably hold the tray table 100 in the stowed position of the tray table 100. In the exemplary implementation, the latch 162 is integrated into the tray table 100 such that the latch 162 does not require any integration, alignment, adjustment, and/or the like with the seating structure (e.g., the seating structure 112 of the aircraft 110 shown in Figure 3, etc.) of the aircraft that holds the tray table 100 (e.g., the structure of the aircraft within which the tray table 100 is mounted and/or installed, etc.). Moreover, in the exemplary implementation the latch 162 is configured as a cartridge 162a that is configured to be interchangeably mounted to the base 102 of the tray table 100, for example using a snap fit, an interference fit, one or more threaded fasteners, a clip, etc. In the exemplary implementation, the latch cartridge 162a is mounted to the base 102 of the tray table 100 using four threaded fasteners (not shown, e.g., the threaded fasteners 390 provided for mounting the latch cartridge 362a to the base 302 of the tray table 300 shown in Figure 17, etc.). The cartridge 162a enables the latch 162 to be relatively quickly and easily removed from the tray table 100, for example for maintenance, repair, replacement, and/or the like. Configuring the latch 162 as a cartridge 162a may therefore reduce labor and thus maintenance costs of the aircraft.

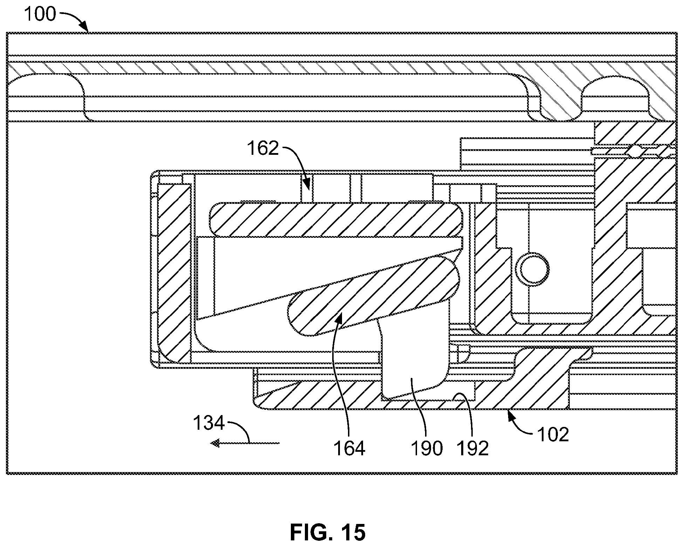

Referring now to Figures 2 and 13-15, the latch 162 includes an actuator 164 (not visible in Figure 2) configured actuate the latch 162 to release the tray table 100 from the stowed position of the tray table 100. Specifically, the latch 162 includes a latching element 190 (not visible in Figure 2) that is configured to releasably engage latching structure 192 (not visible in Figures 2, 13, and 14) of the base 102. The actuator 164 is operatively connected (e.g., directly as shown in the exemplary implementation of Figure 15, indirectly through intervening linkage, etc.) to the latching element 190 such that movement of the actuator 164 in the direction 134 relative to the body of the latch 162 disengages the latching element 190 from the latching structure 192 of the base 102 to unlatch the latch 162 and thereby release the tray table 100 from the stowed position thereof. The tray table 100 includes a handle 166 (not shown in Figures 13-15) for the user to grasp to pull the tray table 100 out of the stowed position of the tray table 100. In the exemplary implementation, the handle 166 of the tray table 100 is mounted to the actuator 164. Accordingly, the act of grasping and using the handle 166 to pull the tray table 100 in the direction 134 away from the stowed position of the tray table 100 and toward the extended position of the tray table 100 also moves the actuator 164 of the latch 162 in the direction 134 such that the latch element 190 of the latch 162 disengages from the latching structure 192 of the base 102. Accordingly, the exemplary implementation of the latch 162 is configured to release the tray table 100 from the stowed position when the tray table 100 is pulled in the direction 134 away from the stowed position and toward the extended position of the tray table 100 using the handle 166. The exemplary implementation of the latch 162 thus enables the user to pull the tray table 100 away from the stowed position toward the extended position with a single motion, which may be more intuitive and therefore may improve user experience.

Referring now solely to Figure 2, the tray table 100 optionally includes a face plate 168, which in the exemplary implementation is mounted in front of the latch 162. In the exemplary implementation, the face plate 168 includes an opening 170 into which the handle 166 of the tray table 100 extends. Optionally, the handle 166 is recessed within the opening in the direction 132, for example to provide an indication that indicates the location of the handle of the tray table 100. Other indications may additionally or alternatively be provided (e.g., a label, an arrow and/or other symbol, etc.). In some implementations, the face plate 168 defined by a single unitary structure, while in other implementations the face plate 168 is defined by two or more interconnected segments. The face plate 168 may be interchangeably mounted to the base 102 (e.g., using a snap fit, an interference fit, one or more threaded fasteners, a clip, etc.). The interchangeable mounting of the face plate 168 enables the face plate 168 to be relatively quickly and easily removed from the tray table 100, for example for maintenance, repair, replacement, and/or the like. The interchangeable mounting of the face plate 168 may therefore reduce labor and thus maintenance costs of the aircraft. Moreover, the interchangeable mounting of the face plate 168 enables the face plate 168 to be more easily customized for different customers.

Referring now to Figure 16, a slide-out tray table 200 having another implementation of a latch 262 is shown. The latch 262 includes an actuator 264 that includes a hinged lever 272 configured actuate the latch 262 to release the tray table 200 from the stowed position thereof. Specifically, the latch 262 includes a latching element (not shown) that is configured to releasably engage latching structure (not shown) of a base 202 of the tray table 200. The lever 272 is operatively connected (e.g., directly, indirectly through intervening linkage, etc.) to the latching element such that movement of an actuation point 274 of the lever 272 in the direction of the arrow 234 disengages the latching element from the latching structure of the base 202 to unlatch the latch 262 and thereby release the tray table 200 from the stowed position thereof.

In the exemplary implementation, the actuation point 274 of the lever 272 is positioned within an opening 270 (e.g., near a bottom 276 of the opening 270 as is shown in Figure 16, etc.) such that the act of grasping and using a handle 266 of the tray table 200 to pull the tray table 200 in the direction 234 away from the stowed position of the tray table 200 and toward the extended position of the tray table 200 also moves the actuation point 274 of the lever 272 in the direction 234 such that the latching element of the latch 262 disengages from the latching structure of the base 202. Accordingly, the exemplary implementation of the latch 262 is configured to release the tray table 200 from the stowed position when the tray table 200 is pulled in the direction 234 away from the stowed position and toward the extended position of the tray table 200 using the handle 266. The exemplary implementation of the latch 262 shown in Figure 16 thus enables the user to pull the tray table 200 away from the stowed position toward the extended position with a single motion, which may be more intuitive and therefore may improve user experience.

Referring again to Figure 9, the tray table 100 optionally includes a biasing mechanism 178 configured to bias the base 102 of the tray table 100 from the stowed position of the tray table 100 toward the extended position of the tray table 100. In other words, when the tray table 100 is in the stowed position thereof, the bias provided by the biasing mechanism 178 biases the base 102 in the direction 134 toward the extended position of the tray table 100. The biasing mechanism 178 may have any configuration that enables the biasing mechanism 178 to function as described and/or illustrated herein. For example, the biasing mechanism 178 is operatively connected to the base 102 (e.g., between the base plates 136 and 140, between the base plate 136 and the cover 126, etc.) such that the biasing mechanism 178 biases the base 102 in the direction 134 when the tray table 100 is in the stowed position.

The bias provided by the biasing mechanism 178 aids initial deployment (i.e., movement in the direction 134) of the tray table 100 away from the stowed position. The bias of the biasing mechanism 178 provides positive pressure against the latch 162 that may reduce or eliminate rattling of the tray table 100 (e.g., during flight, etc.) when the tray table 100 is latched in the stowed position. Moreover, bias provided by the biasing mechanism 178 may provide a visual indication that the tray table 100 is not latched in the stowed position. For example, when the latch 162 is not engaged with the latching structure of the base 102, the bias provided by the biasing mechanism pushes the tray table 100 slightly away from the stowed position in the direction 134, such that a user, flight crew, and/or other individuals can see that the tray table 100 is not latched in the stowed position.

The biasing mechanism 178 may include any structure, type of biasing mechanism, and/or the like that enables the biasing mechanism 178 to function as described and/or illustrated herein. In the exemplary implementation of the biasing mechanism 178, the biasing mechanism 178 includes a helical torsion spring. But, the biasing mechanism 178 may additionally or alternatively include any other type of spring (e.g., a coil spring, a torsion bar, a leaf spring, etc.) and/or another type of biasing mechanism.

Another implementation of the biasing mechanism 178 is illustrated in Figure 17. Specifically, Figure 17 illustrates another implementation of a slide-out tray table 300 that includes a base 302 having base plates 336 and 340. The tray table 300 includes a biasing mechanism 378 configured to bias the base 302 from a stowed position (also referred to herein as a "retracted position") of the tray table 300 toward an extended position of the tray table 300. The biasing mechanism 378 includes a plunger 380 and a coil spring 382 that are mounted to the base plate 340.

The plunger 380 and the coil spring 382 of the biasing mechanism 378 are operatively connected to the base 302 such that the biasing mechanism 378 biases the base 302 in a direction 334 when the tray table 300 is in the stowed position. Specifically, the plunger 380 and the coil spring 382 are configured to engage a tab 384 of the base plate 336 when the tray table 300 is in the stowed position thereof such that the biasing mechanism 378 provides a bias that biases the base 302 in the direction 334 toward the extended position of the tray table 300.

Referring again to Figures 1 and 2, the tray table 100 may be configured as a cartridge that is configured to be interchangeably mounted to the seating structure of the aircraft (e.g., the seating structure 112 of the aircraft 110 shown in Figure 3, etc.), for example using a snap fit, an interference fit, one or more threaded fasteners, a clip, etc. In the exemplary implementation, the tray table 100 is configured to be mounted to the seating structure using four threaded fasteners (not shown) and four mounting tabs 184. The cartridge configuration of the tray table 100 enables the tray table 100 to be relatively quickly and easily removed from the seating structure, for example for maintenance, repair, replacement, and/or the like. Configuring the tray table 100 as a cartridge may therefore reduce labor and thus maintenance costs of the aircraft.

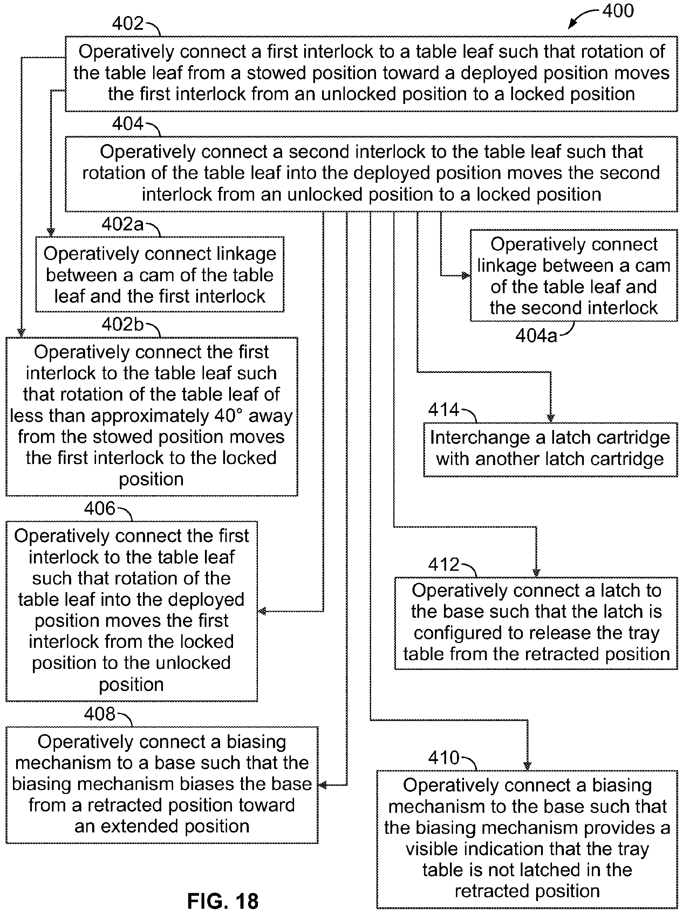

Figure 18 illustrates a method 400 of configuring a slide-out tray table (e.g., the slide-out tray table 100 shown in Figures 1-15, the slide-out tray table 200 shown in Figure 16, the slide-out tray table 300 shown in Figure 17, etc.) for an aircraft (e.g., the aircraft 110 shown in Figures 3 and 4, the aircraft 500 shown in Figure 19, etc.) according to an implementation. The method 400 includes operatively connecting, at 402, a first interlock of the tray table to a table leaf of the tray table such that rotation of the table leaf from a stowed position toward a deployed position of the table leaf moves the first interlock from an unlocked position of the first interlock to a locked position of the first interlock. At 404, the method 400 includes operatively connecting a second interlock of the tray table to the table leaf such that rotation of the table leaf into the deployed position moves the second interlock from an unlocked position of the second interlock to a locked position of the second interlock. At 406, the method 400 optionally includes operatively connecting the first interlock to the table leaf such that rotation of the table leaf into the deployed position moves the first interlock from the locked position of the first interlock to the unlocked position of the first interlock.

In some implementations, operatively connecting at 402 the first interlock to the table leaf includes operatively connecting, at 402a, linkage between a cam of the table leaf and the first interlock. In addition or alternatively, operatively connecting at 404 the second interlock to the table leaf includes operatively connecting, at 404a, linkage between a cam of the table leaf and the second interlock. In some implementations, operatively connecting, at 402, the first interlock to the table leaf includes operatively connecting, at 402b, the first interlock to the table leaf such that rotation of the table leaf of less than approximately 40° away from the stowed position moves the first interlock to the locked position of the first interlock.

Optionally, the method 400 further includes operatively connecting, at 408, a biasing mechanism to a base of the tray table such that the biasing mechanism biases the base from a retracted position toward an extended position of the tray table. The method 400 optionally further includes operatively connecting, at 410, a biasing mechanism to the base of the tray table such that the biasing mechanism provides a visible indication that the tray table is not latched in the retracted position of the tray table.

In some implementations, the method 400 further includes operatively connecting, at 412, a latch to the base of the tray table such that the latch is configured to release the tray table from the retracted position of the tray table when the tray table is pulled away from the retracted position toward the extended position of the tray table.

Some implementations of the method 400 further include interchanging, at 414, a latch cartridge of the tray table with another latch cartridge of the tray table.

Referring now to Figure 19, examples of the disclosure may be described in the context of using the slide-out tray tables disclosed herein on an aircraft 500 that includes an airframe 502 having a fuselage 570. The aircraft 500 includes a plurality of high-level systems 504 and an interior 506. Examples of high-level systems 504 include one or more of a propulsion system 508, an electrical system 510, a hydraulic fluid system 512, a control system 514, and an environmental system 516. Any number of other systems can be included. Although a fixed wing passenger aircraft is shown, the slide-out tray tables disclosed herein can be used with any other type of aircraft, such as, but not limited to, transport aircraft, military aircraft, rotorcraft (e.g., helicopters, etc.), lighter than air vehicles (e.g., balloons, etc.), and/or the like. Moreover, although an aerospace example is shown, the present disclosure can be applied to other industries, such as, but not limited to, the automotive industry, the marine industry, etc.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above can relate to one embodiment or can relate to several embodiments. The embodiments are not limited to those that solve any or all of the stated problems or those that have any or all of the stated benefits and advantages.

The order of execution or performance of the operations in examples of the disclosure illustrated and described herein is not essential, unless otherwise specified. That is, the operations can be performed in any order, unless otherwise specified.

The term "comprising" is used in this specification to mean including the feature(s) or act(s) followed thereafter, without excluding the presence of one or more additional features or acts. The terms "comprising," "including," and "having" are intended to be inclusive and mean that there can be additional elements other than the listed elements. In other words, the use of "including," "comprising," "having," "containing," "involving," and variations thereof, is meant to encompass the items listed thereafter and additional items. Further, references to "one embodiment" or "one implementation" are not intended to be interpreted as excluding the existence of additional embodiments or implementations that also incorporate the recited features. The term "exemplary" is intended to mean "an example of".

When introducing elements of aspects of the disclosure or the examples thereof, the articles "a," "an," "the," and "said" are intended to mean that there are one or more of the elements. In other words, the indefinite articles "a", "an", "the", and "said" as used in the specification and in the claims, unless clearly indicated to the contrary, should be understood to mean "at least one."

The phrase "one or more of the following: A, B, and C" means "at least one of A and/or at least one of B and/or at least one of C." The phrase "and/or", as used in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with openended language such as "comprising" can refer, in one embodiment, to A only (optionally including elements other than B); in another embodiment, to B only (optionally including elements other than A); in yet another embodiment, to both A and B (optionally including other elements); etc.

As used in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of or "exactly one of," or, when used in the claims, "consisting of," will refer to the inclusion of exactly one element of a number or list of elements. In general, the term "or" as used shall only be interpreted as indicating exclusive alternatives (i.e. "one or the other but not both") when preceded by terms of exclusivity, such as "either," "one of "only one of' or "exactly one of." "Consisting essentially of," when used in the claims, shall have its ordinary meaning as used in the field of patent law.

As used in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as anon-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

Use of ordinal terms such as "first," "second," "third," etc., in the claims to modify a claim element does not by itself connote any priority, precedence, or order of one claim element over another or the temporal order in which acts of a method are performed. Ordinal terms are used merely as labels to distinguish one claim element having a certain name from another element having a same name (but for use of the ordinal term), to distinguish the claim elements.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

It is to be understood that the above description is intended to be illustrative, and not restrictive. For example, the above-described embodiments (and/or aspects thereof) can be used in combination with each other. In addition, many modifications can be made to adapt a particular situation or material to the teachings of the various embodiments of the disclosure without departing from the scope of the claims.
While the dimensions and types of materials described herein are intended to define the parameters of the various embodiments of the disclosure, the embodiments are by no means limiting and are example embodiments. Many other embodiments will be apparent to those of ordinary skill in the art upon reviewing the above description. The scope of the various embodiments should, therefore, be determined with reference to the appended claims. In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various embodiments of the claimed invention, including the best mode, and also to enable any person of ordinary skill in the art to practice the various embodiments of the disclosure, including making and using any devices or systems and performing any incorporated methods. The patentable scope of the various embodiments is defined by the claims.

## Claims

1. A slide-out tray table (100) for an aircraft (110; 500), the tray table (100) comprising:
a telescoping base (102) configured to expand outwardly and retract inwardly between an extended position and a retracted position of the tray table (100);
a table leaf (104) mounted to the base (102) such that the table leaf (104) is slidable between the extended and retracted positions of the tray table (100), the table leaf (104) being selectively rotatably between a stowed position and a deployed position; and
an interlock assembly (106) comprising:
a first interlock (142) movable between an unlocked position and a locked position, the first interlock (142) being operatively connected to the table leaf (104) such that rotation of the table leaf (104) from the stowed position toward the deployed position moves the first interlock (142) to the locked position; and
a second interlock (144) movable between an unlocked position and a locked position of the second interlock (144), the second interlock (144) being operatively connected to the table leaf (104) such that rotation of the table leaf (104) into the deployed position moves the second interlock (144) to the locked position of the second interlock (144),
wherein the table leaf (104) comprises a cam (154), the interlock assembly (106) further comprising a first linkage (148) operatively connected between the first interlock (142) and the cam (154) of the table leaf (104) such that the first linkage (148) translates rotation of the table leaf (104) into linear motion of the first linkage (148) to thereby rotate the first interlock (142) between the unlocked and locked positions, and a second linkage (150) operatively connected between the second interlock (144) and the cam (154) of the table leaf (104) such that the second linkage (150) translates rotation of the table leaf (104) into linear motion of the second linkage (150) to thereby rotate the second interlock (144) between the unlocked and locked positions,
wherein in the locked position the first interlock (142) is configured to engage a stop (138) of the base (102) to limit movement of the tray table (100) toward the retracted position of the tray table (100) when the table leaf (104) is in an intermediate position between the stowed and deployed positions of the table leaf (104),
wherein the tray table (100) comprises an egress position between the retracted and extended positions, in the unlocked position the first interlock (142) being configured to engage a base plate (136) of the base (102) to limit rotation of the table leaf (104) from the deployed position toward the stowed position when the tray table (100) is in the egress position, and
wherein in the locked position the second interlock (144) is configured to engage the stop (138) of the base (102) to limit movement of the tray table (100) toward the retracted position past the egress position of the tray table (100) when the table leaf (104) is in the deployed position.

2. The slide-out tray table (100) of claim 1, wherein the first interlock (142) is operatively connected to the table leaf (104) such that rotation of the table leaf (104) into the deployed position moves the first interlock (142) from the locked position of the first interlock (142) to the unlocked position of the first interlock (142).

3. The slide-out tray table (100) of claim 1, further comprising:
a biasing mechanism (178) operatively connected to the base (102) such that the biasing mechanism (178) biases the base (102) from the retracted position toward the extended position of the tray table (100).

4. A method of configuring the slide-out tray table (100) of any one of the preceding claims, the method comprising:
operatively connecting a first interlock (142) of the tray table (100) to a table leaf (104) of the tray table (100) such that rotation of the table leaf (104) from a stowed position toward a deployed position of the table leaf (104) moves the first interlock (142) from an unlocked position of the first interlock (142) to a locked position of the first interlock (142); and
operatively connecting a second interlock (144) of the tray table (100) to the table leaf (104) such that rotation of the table leaf (104) into the deployed position moves the second interlock (144) from an unlocked position of the second interlock (144) to a locked position of the second interlock (144).

## Patentansprüche

1. Ein ausziehbarer Klapptisch (100) für ein Flugzeug (110; 500), wobei der Klapptisch (100) Folgendes umfasst:
eine teleskopierbare Basis (102), die konfiguriert ist, um sich zwischen einer ausgefahrenen Position und einer eingefahrenen Position des Klapptisches (100) nach außen auszudehnen und nach innen einzufahren;
ein Tischblatt (104), das an der Basis (102) so angebracht ist, dass das Tischblatt (104) zwischen der ausgefahrenen und der eingefahrenen Position des Klapptischs (100) verschiebbar ist, wobei das Tischblatt (104) wahlweise zwischen einer verstauten Position und einer Einsatzposition (*deployed position*) drehbar ist; und
eine Interlock- bzw. Sperranordnung (106), die Folgendes umfasst:
eine erste Sperre (142), die zwischen einer entriegelten Position und einer verriegelten Position bewegbar ist, wobei die erste Sperre (142) mit dem Tischblatt (104) wirkverbunden ist, sodass eine Drehung des Tischblatts (104) aus der verstauten Position in Richtung der Einsatzposition die erste Sperre (142) in die verriegelte Position bewegt; und
eine zweite Sperre (144), die zwischen einer entriegelten Position und einer verriegelten Position der zweiten Sperre (144) bewegbar ist, wobei die zweite Sperre (144) mit dem Tischblatt (104) wirkverbunden ist, sodass eine Drehung des Tischblatts (104) in die Einsatzposition die zweite Sperre (144) in die verriegelte Position der zweiten Sperre (144) bewegt,
wobei das Tischblatt (104) eine Nocke (154) umfasst, wobei die Sperranordnung (106) ferner ein erstes Gestänge (*linkage*) (148) umfasst, das funktionsfähig zwischen der ersten Sperre (142) und der Nocke (154) des Tischblatts (104) verbunden ist, sodass das erste Gestänge (148) eine Drehung des Tischblatts (104) in eine lineare Bewegung des ersten Gestänges (148) umsetzt, um dadurch die erste Sperre (142) zwischen der entriegelten und der verriegelten Position zu drehen, und ein zweites Gestänge (150), das funktionsfähig zwischen der zweiten Sperre (144) und der Nocke (154) des Tischblatts (104) verbunden ist, sodass das zweite Gestänge (150) eine Drehung des Tischblatts (104) in eine lineare Bewegung des zweiten Gestänges (150) umsetzt, um dadurch die zweite Sperre (144) zwischen der entriegelten und der verriegelten Position zu drehen,
wobei in der verriegelten Position die erste Sperre (142) konfiguriert ist, um mit einem Anschlag (138) der Basis (102) in Eingriff zu kommen, um die Bewegung des Klapptisches (100) in Richtung der eingefahrenen Position des Klapptisches (100) zu begrenzen, wenn sich das Tischblatt (104) in einer Zwischenposition zwischen der verstauten und der Einsatzposition des Tischblatts (104) befindet,
wobei der Klapptisch (100) eine Durchgangs- bzw. Ausstiegsposition (*egress position*) zwischen der eingefahrenen und der ausgefahrenen Position umfasst, wobei in der entriegelten Position die erste Sperre (142) dazu konfiguriert ist, mit einer Bodenplatte (136) der Basis (102) in Eingriff zu kommen, um eine Drehung des Tischblatts (104) aus der Einsatzposition Position in Richtung der verstauten Position zu begrenzen, wenn sich der Klapptisch (100) in der Ausstiegsposition befindet, und
wobei in der verriegelten Position die zweite Sperre (144) dazu konfiguriert ist, mit dem Anschlag (138) der Basis (102) in Eingriff zu kommen, um die Bewegung des Klapptisches (100) in Richtung der eingefahrenen Position über die Ausstiegsposition des Klapptisches (100) hinaus zu begrenzen, wenn sich das Tischblatt (104) in der ausgefahrenen Position befindet.

2. Der ausziehbare Klapptisch (100) nach Anspruch 1, wobei die erste Sperre (142) mit dem Tischblatt (104) wirkverbunden ist, sodass eine Drehung des Tischblatts (104) in die Einsatzposition die erste Sperre (142) aus der verriegelten Position der ersten Sperre (142) in die entriegelte Position der ersten Sperre (142) bewegt.

3. Der ausziehbare Klapptisch (100) nach Anspruch 1, ferner umfassend:
einen Vorspannmechanismus (178), der mit der Basis (102) wirkverbunden ist, sodass der Vorspannmechanismus (178) die Basis (102) aus der eingefahrenen Position in Richtung der ausgefahrenen Position des Klapptisches (100) vorspannt.

4. Ein Verfahren zum Konfigurieren des ausziehbaren Klapptisches (100) nach irgendeinem der vorstehenden Ansprüche, wobei das Verfahren Folgendes umfasst:
Wirkverbinden einer ersten Sperre (142) des Klapptisches (100) mit einem Tischblatt (104) des Klapptisches (100), sodass eine Drehung des Tischblatts (104) aus einer verstauten Position in eine Einsatzposition des Tischblatts (104) die erste Sperre (142) aus einer entriegelten Position der ersten Sperre (142) in eine verriegelte Position der ersten Sperre (142) bewegt; und
Wirkverbinden einer zweiten Sperre (144) des Klapptisches (100) mit dem Tischblatt (104), sodass eine Drehung des Tischblatts (104) in die Einsatzposition die zweite Sperre (144) aus einer entriegelten Position der zweiten Sperre (144) in eine verriegelte Position der zweiten Sperre (144) bewegt.

## Revendications

1. Une tablette escamotable (100) pour un avion (110 ; 500), la tablette (100) comprenant :
une base télescopique (102) configurée pour s'étendre vers l'extérieur et se rétracter vers l'intérieur entre une position étendue et une position rétractée de la tablette (100) ;
un plateau (*table leaf*) (104) monté sur la base (102) de manière que le plateau (104) puisse coulisser entre les positions étendue et rétractée de la tablette (100), le plateau (104) pouvant tourner de manière sélective entre une position rangée et une position déployée ; et
un ensemble d'interverrouillage (106) comprenant :
un premier dispositif d'interverrouillage (142) mobile entre une position déverrouillée et une position verrouillée, le premier dispositif d'interverrouillage (142) étant relié de manière opérationnelle au plateau (104) de manière que la rotation du plateau (104) depuis la position rangée vers la position déployée déplace le premier dispositif d'interverrouillage (142) vers la position verrouillée ; et
un deuxième dispositif d'interverrouillage (144) mobile entre une position déverrouillée et une position verrouillée du deuxième dispositif d'interverrouillage (144), le deuxième dispositif d'interverrouillage (144) étant relié de manière opérationnelle au plateau (104) de manière que la rotation du plateau (104) vers la position déployée déplace le deuxième dispositif d'interverrouillage (144) vers la position verrouillée du deuxième dispositif d'interverrouillage (144),
sachant que le plateau (104) comprend une came (154), l'ensemble d'interverrouillage (106) comprenant en outre : une première tringlerie (148) reliée de manière opérationnelle entre le premier dispositif d'interverrouillage (142) et la came (154) du plateau (104) de manière que la première tringlerie (148) transforme la rotation du plateau (104) en un mouvement linéaire de la première tringlerie (148) pour faire ainsi tourner le premier dispositif d'interverrouillage (142) entre les positions déverrouillée et verrouillée, et une deuxième tringlerie (150) reliée de manière opérationnelle entre le deuxième dispositif d'interverrouillage (144) et la came (154) du plateau (104) de manière que la deuxième tringlerie (150) transforme la rotation du plateau (104) en un mouvement linéaire de la deuxième tringlerie (150) pour faire ainsi tourner le deuxième dispositif d'interverrouillage (144) entre les positions déverrouillée et verrouillée,
sachant que dans la position verrouillée, le premier dispositif d'interverrouillage (142) est configuré pour venir en prise avec une butée (138) de la base (102) afin de limiter le mouvement de la tablette (100) vers la position rétractée de la tablette (100) lorsque le plateau (104) est dans une position intermédiaire entre les positions rangée et déployée du plateau (104),
sachant que la tablette (100) comprend une position de sortie ou encore de passage (*egress position*) entre les positions rétractée et étendue, sachant que dans la position déverrouillée le premier dispositif d'interverrouillage (142) est configuré pour venir en prise avec une plaque de base (136) de la base (102) afin de limiter la rotation du plateau (104) depuis la position déployée vers la position rangée lorsque la tablette (100) est dans la position de sortie, et
sachant que, dans la position verrouillée, le deuxième dispositif d'interverrouillage (144) est configuré pour venir en prise avec la butée (138) de la base (102) afin de limiter le mouvement de la tablette (100) vers la position rétractée au-delà de la position de sortie de la tablette (100) lorsque le plateau (104) est dans la position déployée.

2. La tablette escamotable (100) d'après la revendication 1, sachant que le premier dispositif d'interverrouillage (142) est relié de manière opérationnelle au plateau (104) de manière que la rotation du plateau (104) vers la position déployée déplace le premier dispositif d'interverrouillage (142) de la position verrouillée du premier dispositif d'interverrouillage (142) vers la position déverrouillée du premier dispositif d'interverrouillage (142).

3. La tablette escamotable (100) d'après la revendication 1, comprenant en outre :
un mécanisme de sollicitation (178) relié de manière opérationnelle à la base (102) de manière que le mécanisme de sollicitation (178) sollicite la base (102) depuis la position rétractée vers la position étendue de la tablette (100).

4. Un procédé de configuration de la tablette escamotable (100) d'après l'une quelconque des revendications précédentes, le procédé comprenant le fait de :
relier de manière opérationnelle un premier dispositif d'interverrouillage (142) de la tablette (100) à un plateau (104) de la tablette (100) de manière que la rotation du plateau (104) depuis une position rangée vers une position déployée du plateau (104) déplace le premier dispositif d'interverrouillage (142) d'une position déverrouillée du premier dispositif d'interverrouillage (142) vers une position verrouillée du premier dispositif d'interverrouillage (142) ; et de
relier de manière opérationnelle un deuxième dispositif d'interverrouillage (144) de la tablette (100) au plateau (104) de manière que la rotation du plateau (104) vers la position déployée déplace le deuxième dispositif d'interverrouillage (144) d'une position déverrouillée du deuxième dispositif d'interverrouillage (144) vers une position verrouillée du deuxième dispositif d'interverrouillage (144).
